(19) Europäisches Patentamt
European Patent Office
Office européen des brevets

(11) **EP 2 631 602 B1**

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(51) Int Cl.:
*G01D 5/14* *(2006.01)*     *G01D 5/244* *(2006.01)*

(21) Anmeldenummer: **12008324.1**

(22) Anmeldetag: **13.12.2012**

(54) **Encoderring**

Encoder ring

Bague d'encodage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2012 EP 12001207**

(43) Veröffentlichungstag der Anmeldung:
**28.08.2013 Patentblatt 2013/35**

(73) Patentinhaber: **Carl Freudenberg KG**
**69469 Weinheim (DE)**

(72) Erfinder: **Heiland, Marc**
**67549 Worms (DE)**

(56) Entgegenhaltungen:
**EP-A1- 2 078 935     JP-A- 2007 085 971**
**JP-A- 2008 145 185**

EP 2 631 602 B1

**Beschreibung**

Technisches Gebiet

Die Erfindung betrifft einen Ring nach dem Oberbegriff des Patentanspruchs 1 .

Stand der Technik

Ringe der eingangs genannten Art, sogenannte Encoderringe, sind aus dem Stand der Technik, beispielsweise aus der EP 1 674 831 A1, bereits bekannt.

Die JP 2008 145 185 A zeigt einen Ring mit einer im Querschnitt bogenförmigen Oberfläche, welche einem Sensor gegenüberliegt.

Während der Rotation einer Welle können über eine bestimmte Magnetisierung eines Rings die Drehzahl und ein Referenzpunkt der Welle erfasst werden.

Üblicherweise trägt ein Tragkörper eines Rings einen Feldkörper, welcher einzelne magnetische Bereiche aufweist- Ein gängiger Feldkörper besteht aus einem Elastomer, in welchem hartmagnetische Partikel aufgenommen sind. Durch ein äußeres Magnetfeld werden die hartmagnetischen Partikel magnetisiert, so dass der Feldkörper in seiner Gesamtheit ein magnetisches Feld erzeugt.

Dieses magnetische Feld liefert Signale, die von einem Sensor erfasst werden können.

Ein Sensor ist üblicherweise vom Ring axial beabstandet angeordnet. Der Sensor liegt dabei dem Feldkörper axial gegenüber. Der Sensor wird in einem so genannten Leseabstand vom Ring bzw. Feldkörper positioniert.

An diesem Leseabstand können mehrere Sensoren angeordnet werden, die in radialer Richtung zueinander beabstandet sind, jedoch zum Ring bzw. zum Feldkörper einen konstanten axialen Leseabstand einhalten.

Insoweit befindet sich jeder der Sensoren in einer bestimmten Leseposition, die durch einen radialen Abstand von einer Achse und einen axialen Leseabstand vom Ring bzw. Feldkörper bestimmt ist.

In der Praxis ist es häufig nicht möglich, eine Vielzahl von Sensoren anzuordnen, sondern möglicherweise nur einen einzigen Sensor.

Des Weiteren kann die Leseposition, d. h. der axiale Leseabstand zum Ring und der radiale Abstand zur Achse, aus konstruktiven Gründen festgelegt sein.

Da ein Sensor nur eine bestimmte Empfindlichkeit aufweist, ist es erforderlich, in der Leseposition des Sensors ein möglichst starkes magnetisches Signal zu erzeugen. Dies ist mit den bisher bekannten Ringen nicht in zufrieden stellendem Maß möglich.

Zwar ist aus der JP 2008 145 185 A bekannt, magnetische Feldlinien zu fokussieren, jedoch wird dies über eine Formgebung eines Tragkörpers und/ oder Feldkörpers erreicht. Dies kann erhebliche Kosten verursachen.

Des Weiteren wird zur Einsparung von Kosten angestrebt, die Menge des verwendeten magnetischen Materials zu reduzieren.

Darstellung der Erfindung

Der Erfindung liegt daher die Aufgabe zugrunde, einen Ring der eingangs genannten Art derart auszugestalten und weiter zu bilden, dass dessen magnetische Signalstärke an die Leseposition des ihm zugeordneten Sensors anpassbar ist.

Die vorliegende Erfindung löst die zuvor genannte Aufgabe durch die Merkmale des Patentanspruchs 1.

Ein erfindungsgemäßer Ring zur Anordnung auf einem um eine Achse rotierbaren Element umfasst einen Tragkörper, welcher einen Zentraldurchgang umfängt, wobei der Tragkörper mit einem Feldkörper verbunden ist und wobei der Feldkörper einzelne magnetisierte Bereiche aufweist, die gemeinsam ein magnetisches Feld erzeugen. Es ist vorgesehen, dass die einzelnen Bereiche derart magnetisiert sind, dass sich die Richtung ihrer jeweiligen Magnetisierung in radialer oder in axialer Richtung ändert.

Erfindungsgemäß ist vorgesehen, dass der Feldkörper mit einer Oberfläche einem Sensor zuwendbar ist, wobei die Ausrichtung der Dipole im Feldkörper derart gewählt ist, dass sie jeweils einen Winkel $\alpha$ mit der Normalen zur Sensorebene einschließen, und dass bei Verwendung eines Tragkörpers (2, 2'''), der nicht weichmagnetisch leitend ist, der Winkel $\alpha$ gleich

$$\tan^{-1}\left(\frac{3\,sin\beta\,cos\beta}{1-3\,sin^2\beta}\right)$$

ist, oder dass bei Verwendung eines Tragkörpers (2, 2'''), der weichmagnetisch ist, der Winkel $\alpha$ größer als der Winkel $\beta$ und kleiner

$$\tan^{-1}\left(\frac{3\,sin\beta\,cos\beta}{1-3\,sin^2\beta}\right)$$

ist, wobei der jeweilige Winkel $\beta$ durch eine Gerade bestimmt wird, welche durch den Sensor und den jeweiligen Ort eines Dipols verläuft, und wobei diese Gerade den jeweiligen Winkel $\beta$ mit der Normalen zur Sensorebene einschließt.

Erfindungsgemäß ist erkannt worden, dass Ringe des Stands der Technik derart magnetisiert sind, dass eine besondere Magnetisierungsrichtung auftritt. In Bereichen auf unterschiedlichen Radien ist die Magnetisierungsrichtung aber gerade nicht derart orientiert, dass deren Feldlinien parallel in einen Sensor einlaufen. Daher ist deren Beitrag zur Feldstärke nicht optimal.

Darauf ist erkannt worden, dass die Richtungen der Magnetisierung derart geändert werden können, dass Stellen maximaler Signalintensität frei wählbar und einstellbar sind.

Dabei ist konkret erkannt worden, dass eine Änderung der Richtungen der jeweiligen Magnetisierungen in radialer oder in axialer Richtung zu einer Fokussierung von magnetischen Feldlinien an bestimmten Stellen führt.

Diese Fokussierung erzeugt an diesen Stellen eine besonders hohe magnetische Signalintensität. An diesen Stellen kann ein Sensor besonders klar und deutlich magnetische Signale erfassen und detektieren.

Durch die erfindungsgemäße Ausrichtung der Dipole wird einem Sensor eine möglichst große Magnetfeldkomponente zugeführt.

Insoweit ist ein Ring angegeben, dessen Magnetfeldcharakteristik an unterschiedliche bauliche Gegebenheiten anpassbar ist.

Folglich ist die eingangs genannte Aufgabe gelöst.

Jede Richtung eines Bereichs könnte je einen Winkel mit einer orthogonal zu einer Ringebene orientierten Achse einschließen. Durch diese konkrete Ausgestaltung werden die Feldlinien derart ausgerichtet, dass sie sich an bestimmten Stellen verstärken und zu einer großen Signalintensität des magnetischen Feldes kombinieren.

Vor diesem Hintergrund könnten zwei in radialer oder in axialer Richtung einander folgende Bereiche Richtungen der Magnetisierung aufweisen, die unterschiedliche Winkel mit einer orthogonal zu einer Ringebene orientierten Achse einschließen. Durch diese konkrete Ausgestaltung ist sicher gestellt, dass die Richtungen der Magnetisierungen sich kontinuierlich oder schrittweise in radialer oder in axialer Richtung ändern bzw. relativ zu einer Achse, insbesondere einer Drehachse, neigen.

Die Änderung der Winkel in radialer Richtung könnte zwischen 5° und 60° pro mm betragen. Durch diese konkrete Ausgestaltung wird ein Drehwinkelgradient geschaffen, der sicher stellt, dass die Richtungen der einzelnen Magnetisierungen mit zunehmendem radialen oder axialen Abstand von einem Referenzpunkt mehr und mehr relativ zu einer Achse geneigt werden. Es hat sich heraus gestellt, dass ein Drehwinkelgradient in Abhängigkeit von der Leseposition eines Sensors sowie in Abhängigkeit vom Material des Tragkörpers gewählt werden muss.

Vor diesem Hintergrund könnte die Änderung der Winkel in radialer Richtung zwischen 10° und 20° pro mm betragen. Bevorzugt könnte die Änderung der Winkel in radialer Richtung 15° pro mm betragen. Dieser Drehwinkelgradient hat sich als besonders vorteilhaft erwiesen, wenn ein Sensor in axialer Richtung 3 mm vom Feldkörper beabstandet ist, wobei der Tragkörper aus einem ferromagnetischen Blech gefertigt ist. Bei dem zuvor genannten Drehwinkelgradienten stellt sich eine Erhöhung der Signalintensität um 10% gegenüber einem herkömmlichen Drehwinkelgradienten von 0° ein.

Die Änderung der Winkel in radialer Richtung könnte zwischen 25° und 35° pro mm betragen. Besonders bevorzugt könnte die Änderung der Winkel in radialer Richtung 30° pro mm betragen. Dieser Drehwinkelgradient hat sich als besonders vorteilhaft erwiesen, wenn der Sensor in axialer Richtung etwa 3 mm vom Feldkörper beabstandet ist und der Tragkörper aus einem nicht ferromagnetischen Material gefertigt ist. Es stellt sich hier eine Erhöhung der Signalintensität um 30% gegenüber einem herkömmlichen Drehwinkelgradienten von 0° ein.

Vor diesem Hintergrund könnte die Änderung der Winkel in radialer Richtung zwischen 5° und 60° pro mm betragen. Bevorzugt könnte die Änderung der Winkel in radialer Richtung 60° pro mm betragen. Dieser Drehwinkelgradient hat sich als besonders vorteilhaft erwiesen, wenn ein Sensor in axialer Richtung 1 mm vom Feldkörper beabstandet ist, wobei der Tragkörper aus einem ferromagnetischen Blech gefertigt ist. Bei dem zuvor genannten Drehwinkelgradienten stellt sich eine Erhöhung der Signalintensität um 60% gegenüber einem herkömmlichen Drehwinkelgradienten von 0° ein.

Die Änderung der Winkel in radialer Richtung könnte zwischen 5° und 60° pro mm betragen. Besonders bevorzugt könnte die Änderung der Winkel in radialer Richtung 60° pro mm betragen. Dieser Drehwinkelgradient hat sich als besonders vorteilhaft erwiesen, wenn der Sensor in axialer Richtung etwa 1 mm vom Feldkörper beabstandet ist und der Tragkörper aus einem nicht ferromagnetischen Material gefertigt ist. Es stellt sich hier eine Erhöhung der Signalintensität um 130% gegenüber einem herkömmlichen Drehwinkelgradienten von 0° ein.

Vor diesem Hintergrund könnte der Tragkörper aus einem ferromagnetischen Material gefertigt sein. Bei Verwendung eines ferromagnetischen Materials kann der Drehwinkelgradient relativ niedrig gewählt werden.

Der Tragkörper könnte aus einem nicht ferromagnetischen Material gefertigt sein. Durch ein solches Material können relativ leichte Ringe gefertigt werden.

Der Feldkörper könnte konkav ausgebildet sein. Durch diese konkrete Ausgestaltung ist eine Fokussierung magnetischer Feldlinien in bestimmten Stellen erreichbar.

Der Tragkörper könnte konkav ausgebildet sein. Vor diesem Hintergrund ist konkret denkbar, dass der Tragkörper eine konkave Einbuchtung aufweist, in welche der Feldkörper eingefügt ist. Der Feldkörper bzw. Tragkörper könnte derart konkav ausgebildet sein, dass die konkave Einbuchtung einen parabolischen Verlauf zeigt. Hierdurch wird quasi eine Art Brennpunkt für die magnetischen Feldlinien nach Art eines Parabolspiegels erzeugt.

Der Feldkörper könnte mit einer Oberfläche einem Sensor zuwendbar sein, wobei die Oberfläche in den Zonen ihrer Erstreckung, in der sich die Richtung der Magnetisierung in radialer oder in axialer Richtung ändert, orthogonal oder parallel zur Achse eben oder ungekrümmt ist. Bevorzugt ist die Oberfläche in allen Zonen ihrer Erstreckung, in der sich die Richtung der Magnetisierung in radialer oder in axialer Richtung ändert, orthogonal oder parallel zur Achse eben oder ungekrümmt. Ein Feldkörper und/ oder Tragkörper muss nicht konkav zum Sensor gekrümmt werden, um eine Fokussierung eines magnetischen Feldes zu erzielen.

Eine Anordnung könnte eine rotierbare Welle und einen mit dieser drehfest verbundenen Ring der hier beschriebenen Art aufweisen, wobei der Ring koaxial zu der Welle angeordnet und mit dieser rotierbar ist und wobei ein Sensor vorgesehen ist, welcher magnetische Signale des magnetischen Felds erfasst.

Kurzbeschreibung der Zeichnung

In der Zeichnung zeigen

Fig. 1      einen Ring des Stands der Technik, bei welchem sich die Richtungen der Magnetisierungen der Bereiche in radialer Richtung nicht ändern,

Fig. 2      einen Ring gemäß der Erfindung, bei welchem die einzelnen Bereiche derart magnetisiert sind, dass sich die Richtung ihrer jeweiligen Magnetisierung in radialer Richtung ändert,

Fig. 3      einen Ring des Stands der Technik, bei welchem sich die Richtungen der Magnetisierungen der Bereiche in axialer Richtung nicht ändern,

Fig. 4      einen Ring gemäß der Erfindung, bei welchem die einzelnen Bereiche derart magnetisiert sind, dass sich die Richtung ihrer jeweiligen Magnetisierung in axialer Richtung ändert, **und**

Fig. 5      eine schematische Ansicht der idealen Ausrichtung eines magnetischen Dipols m für einen Sensor an einem bestimmten Ort.

Ausführung der Erfindung

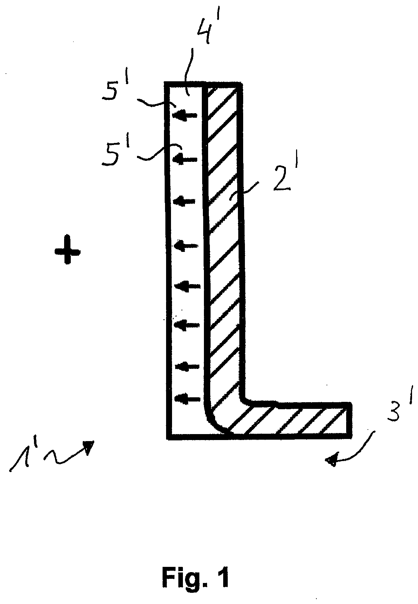

Fig. 1 zeigt einen Ring 1' zur Anordnung auf einem um eine Achse rotierbaren Element, umfassend einen Tragkörper 2', welcher einen Zentraldurchgang 3' umfängt, wobei der Tragkörper 2' mit einem Feldkörper 4' verbunden ist und wobei der Feldkörper 4' einzelne magnetisierte Bereiche 5' aufweist, die gemeinsam ein magnetisches Feld erzeugen.

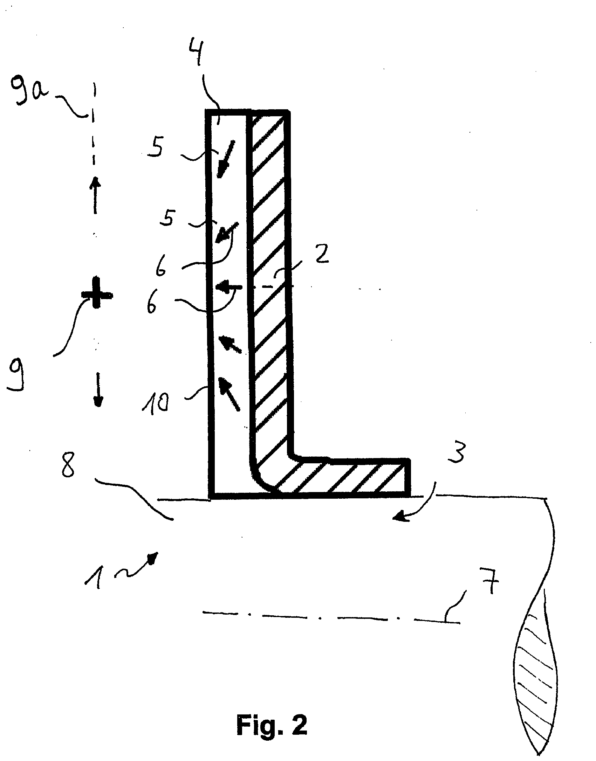

Fig. 2 zeigt einen erfindungsgemäßen Ring 1 zur Anordnung auf einem um eine Achse 7 rotierbaren Element, umfassend einen Tragkörper 2, welcher einen Zentraldurchgang 3 umfängt, wobei der Tragkörper 2 mit einem Feldkörper 4 verbunden ist und wobei der Feldkörper 4 einzelne magnetisierte Bereiche 5 aufweist, die gemeinsam ein magnetisches Feld erzeugen.

Die einzelnen Bereiche 5 sind derart magnetisiert, dass sich die Richtung 6 ihrer jeweiligen Magnetisierung in radialer Richtung ändert. Die Richtung 6 der Magnetisierung ist durch Pfeile dargestellt, welche unterschiedlich zu einer Achse 7 geneigt sind. Die Achse 7 ist die Drehachse einer Welle, auf der der Ring 1, nämlich der Encoderring, drehfest aufgesetzt ist.

Die Ausrichtung der Dipole (m) im Feldkörper 4 ist derart gewählt, dass sie jeweils einen Winkel $\alpha$ mit der Normalen zur Sensorebene 9a einschließen, der kleiner oder gleich

$$\tan^{-1}\left(\frac{3\,\sin\beta\,\cos\beta}{1-3\,\sin^2\beta}\right)$$

ist, wobei der jeweilige Winkel $\beta$ durch eine Gerade bestimmt wird, welche durch den Sensor 9 und den jeweiligen Ort eines Dipols m verläuft, und wobei diese Gerade den jeweiligen Winkel $\beta$ mit der Normalen zur Sensorebene 9a einschließt.

Der Feldkörper 4 ist mit einer Oberfläche 10 einem Sensor 9 zuwendbar. Die Oberfläche 10 ist in den Zonen ihrer Erstreckung, in der sich die Richtung 6 der Magnetisierung in radialer Richtung ändert, orthogonal zur Achse 7 bzw. in radialer Richtung eben oder ungekrümmt.

Jede Richtung 6 eines Bereichs 5 schließt je einen Winkel mit einer orthogonal zu einer Ringebene orientierten Achse 7 ein.

Zwei in radialer Richtung einander folgende Bereiche 5 weisen Richtungen 6 auf, die unterschiedliche Winkel mit einer orthogonal zu einer Ringebene orientierten Achse 7 einschließen.

Die Änderung der Winkel in radialer Richtung, nämlich der Drehwinkelgradient, beträgt zwischen 5° und 60° pro mm.

Der Tragkörper 2 ist aus einem ferromagnetischen Material gefertigt, nämlich einem ferromagnetischen Blech. Es ist aber auch denkbar, dass der Tragkörper 2 aus einem nicht ferromagnetischen Material gefertigt ist.

Fig. 2 zeigt konkret eine Anordnung, welche eine rotierbare Welle 8 und einen mit dieser drehfest verbundenen Ring 1 umfasst, wobei der Ring 1 koaxial zu der Welle 8 angeordnet und mit dieser rotierbar ist und wobei ein Sensor 9 vorgesehen ist, welcher magnetische Signale des magnetischen Felds erfasst.

Der Sensor 9 ist in einer Leseposition angeordnet, welche in axialer Richtung einen Leseabstand zur Oberfläche 10 des Feldkörpers 4 aufweist. Der Sensor 9 weist überdies in radialer Richtung einen Abstand zur Achse 7 auf.

Der Sensor 9 kann aus der dargestellten radialen Position nach oben oder unten verschoben werden (Pfeile), wobei dann jeweils die erfasste Signalintensität reduziert wird.

Der Leseabstand in axialer Richtung beträgt vorzugsweise 1 mm oder 3 mm, wobei zu jedem Leseabstand und jedem Material, aus dem der Tragkörper 2 gefertigt ist, ein optimaler Drehwinkelgradient ermittelbar ist.

Der Feldkörper 4 ist aus einem Polymer, vorzugsweise aus einem Gummi, gefertigt. Im Polymer sind ferromagnetische oder hartmagnetische Partikel aufgenommen, welche durch ein externes Magnetfeld magnetisiert sind.

Das externe Magnetfeld wird so geführt, dass die Richtungen 6 der einzelnen Bereiche 5 des Feldkörpers 4 ihre jeweilige Orientierung relativ zur Ringebene bzw. zur Achse 7 einnehmen.

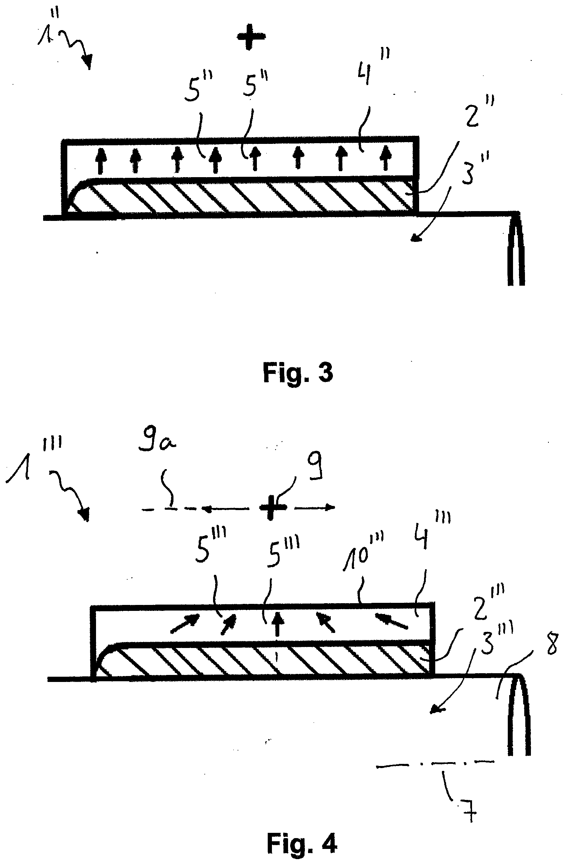

Fig. 3 zeigt einen Ring 1" zur Anordnung auf einem um eine Achse rotierbaren Element, umfassend einen Tragkörper 2", welcher einen Zentraldurchgang 3" umfängt, wobei der Tragkörper 2" mit einem Feldkörper 4" verbunden ist und wobei der Feldkörper 4" einzelne magnetisierte Bereiche 5" aufweist, die gemeinsam ein magnetisches Feld erzeugen.

Fig. 4 zeigt einen erfindungsgemäßen Ring 1'" zur Anordnung auf einem um eine Achse 7 rotierbaren Element, umfassend einen Tragkörper 2'", welcher einen Zentraldurchgang 3'" umfängt, wobei der Tragkörper 2'" mit einem Feldkörper 4'" verbunden ist und wobei der Feldkörper 4'" einzelne magnetisierte Bereiche 5'" aufweist, die gemeinsam ein magnetisches Feld erzeugen.

Die einzelnen Bereiche 5'" sind derart magnetisiert, dass sich die Richtung 6'" ihrer jeweiligen Magnetisierung in axialer Richtung ändert. Die Richtung 6'" der Magnetisierung ist durch Pfeile dargestellt, welche unterschiedlich zu einer Achse 7 geneigt sind.

Die Achse 7 ist die Drehachse einer Welle, auf der der Ring 1'", nämlich der Encoderring, drehfest aufgesetzt ist.

Der Feldkörper 4'" ist mit einer Oberfläche 10'" einem Sensor 9 zuwendbar. Die Oberfläche 10'" ist in den Zonen ihrer Erstreckung, in der sich die Richtung 6'" der Magnetisierung in axialer Richtung ändert, parallel zur Achse 7 bzw. in axialer Richtung eben oder ungekrümmt.

Jede Richtung 6'" eines Bereichs 5'" schließt je einen Winkel mit einer orthogonal zu einer Ringebene orientierten Achse 7 ein.

Zwei in axialer Richtung einander folgende Bereiche 5'" weisen Richtungen 6'" auf, die unterschiedliche Winkel mit einer orthogonal zu einer Ringebene orientierten Achse 7 einschließen.

Die Änderung der Winkel in axialer Richtung, nämlich der Drehwinkelgradient, beträgt zwischen 5° und 60° pro mm.

Der Tragkörper 2'" ist aus einem ferromagnetischen Material gefertigt, nämlich einem ferromagnetischen Blech. Es ist aber auch denkbar, dass der Tragkörper 2'" aus einem nicht ferromagnetischen Material gefertigt ist.

Fig. 4 zeigt konkret eine Anordnung, welche eine rotierbare Welle 8 und einen mit dieser drehfest verbundenen Ring 1'" umfasst, wobei der Ring 1'" koaxial zu der Welle 8 angeordnet und mit dieser rotierbar ist und wobei ein Sensor 9 vorgesehen ist, welcher magnetische Signale des magnetischen Felds erfasst.

Der Sensor 9 ist in einer Leseposition angeordnet, welche in radialer Richtung einen Leseabstand zur Oberfläche 10'" des Feldkörpers 4'" aufweist.

Der Sensor 9 kann aus der dargestellten axialen Position nach links oder rechts verschoben werden (Pfeile), wobei dann die erfasste Signalintensität reduziert wird.

Der Feldkörper 4'" ist aus einem Polymer, vorzugsweise aus einem Gummi, gefertigt. Im Polymer sind ferromagnetische oder hartmagnetische Partikel aufgenommen, welche durch ein externes Magnetfeld magnetisiert sind.

Das externe Magnetfeld wird so geführt, dass die Richtungen 6'" der einzelnen Bereiche 5'" des Feldkörpers 4'" ihre jeweilige Orientierung relativ zur Ringebene bzw. zur Achse 7 einnehmen.

In den Fig. 2 und 4 ist dargestellt, dass der Feldkörper 4, 4'" in einer Schnittebene durch die Achse 7 im Querschnitt überwiegend rechteckig oder quadratisch ausgestaltet ist. Die Achse 7 liegt in dieser gezeigten Schnittebene. Der Feldkörper 4, 4'" weist eine dem Sensor 9 zugewandte Oberfläche 10, 10'" auf, die orthogonal bzw. parallel zur Achse 7 ungekrümmt ist.

Der Feldkörper 4, 4'" ist daher nicht überwiegend oder bereichsweise derart gekrümmt, dass die Fokussierung magnetischer Feldlinien am Ort des Sensors 9 durch eine Krümmung des Feldkörpers 4, 4'" erzeugt wird. Auch der Tragkörper 2, 2'" ist nicht überwiegend derart gekrümmt, dass die Fokussierung magnetischer Feldlinien am Ort des Sensors 9 durch eine Krümmung des Feldkörpers 4, 4'" oder des Tragkörpers 2, 2'" erzeugt wird.

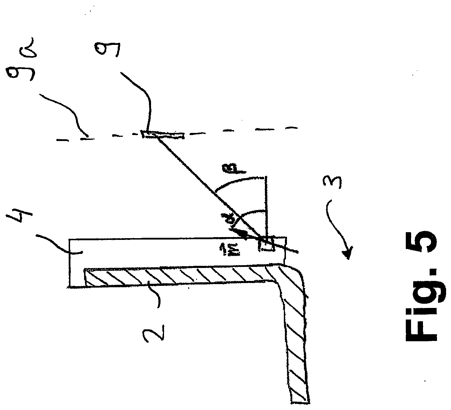

Fig. 5 zeigt, dass die Ausrichtung der Dipole (m) im Feldkörper 4 derart gewählt ist, dass sie jeweils einen Winkel $\alpha$ mit der Normalen zur Sensorebene 9a einschließen, der kleiner oder gleich

$$\tan^{-1}\left(\frac{3\,\sin\beta\,\cos\beta}{1 - 3\,\sin^2\beta}\right)$$

ist, wobei der jeweilige Winkel $\beta$ durch eine Gerade bestimmt wird, welche durch den Sensor 9 und den jeweiligen Ort eines Dipols m verläuft, und wobei diese Gerade den jeweiligen Winkel $\beta$ mit der Normalen zur Sensorebene 9a einschließt.

Vor diesem Hintergrund ist in Fig. 5 dargestellt, dass an jedem Ort ein kleiner magnetischer Dipol m existiert. An jedem Ort ist die optimale Ausrichtung dieses Dipols m, um in einem Sensor 9 eine möglichst große Magnetfeldkomponente in horizontaler Richtung zu erzeugen, nur abhängig von dem Winkel $\beta$, unter welchem der Sensor 9 relativ zu dem jeweiligen Ort positioniert ist. Die Ausrichtung des Dipols m an diesem Ort ist mit α bezeichnet. Sowohl α als auch β bezeichnen Winkel, die mit der Horizontalen eingeschlossen werden. Die Horizontale ist in der Anordnung gemäß Fig. 5 orthogonal zur Sensorebene 9a orientiert und bildet daher die Normale zur Sensorebene 9a.

Ein optimales α bei Verwendung eines Tragkörpers, der nicht weichmagnetisch leitend ist, errechnet sich wie folgt:

$$\alpha = \tan^{-1}\left(\frac{3\,sin\beta\,cos\beta}{1-3\,sin^2\beta}\right)$$

Bei einem weichmagnetischen Tragkörper ist der optimale Winkel α etwas kleiner, nämlich wie folgt:

$$\beta < \alpha < \tan^{-1}\left(\frac{3\,sin\beta\,cos\beta}{1-3\,sin^2\beta}\right)$$

**Patentansprüche**

1. Ring (1, 1''') zur Anordnung auf einem um eine Achse (7) rotierbaren Element, umfassend einen Tragkörper (2, 2'''), welcher einen Zentraldurchgang (3, 3''') umfängt, wobei der Tragkörper (2, 2''') mit einem Feldkörper (4, 4''') verbunden ist, wobei der Feldkörper (4, 4''') einzelne magnetisierte Bereiche (5, 5''') aufweist, die gemeinsam ein magnetisches Feld erzeugen, und wobei die einzelnen Bereiche (5, 5''') derart magnetisiert sind, dass sich die Richtung (6, 6''') ihrer jeweiligen Magnetisierung in radialer oder in axialer Richtung ändert, **dadurch gekennzeichnet, dass** der Feldkörper (4, 4''') mit einer Oberfläche (10, 10''') einem Sensor (9) zuwendbar ist, wobei die Ausrichtung der Dipole (m) im Feldkörper (4, 4''') derart gewählt ist, dass sie jeweils einen Winkel α mit der Normalen zur Sensorebene (9a) einschließen und dass bei Verwendung eines Tragkörpers (2, 2'''), der nicht weichmagnetisch leitend ist, der Winkel α gleich

$$\tan^{-1}\left(\frac{3\,sin\beta\,cos\beta}{1-3\,sin^2\beta}\right)$$

ist, oder dass bei Verwendung eines Tragkörpers (2, 2'''), der weichmagnetisch ist, der Winkel α größer als der Winkel β und kleiner

$$\tan^{-1}\left(\frac{3\,sin\beta\,cos\beta}{1-3\,sin^2\beta}\right)$$

ist, wobei der jeweilige Winkel β durch eine Gerade bestimmt wird, welche durch den Sensor (9) und den jeweiligen Ort eines Dipols (m) verläuft, wobei diese Gerade den jeweiligen Winkel β mit der Normalen zur Sensorebene (9a) einschließt, wobei der Sensor (9) in einer Leseposition angeordnet ist, welche in axialer Richtung einen Leseabstand zur Oberfläche (10) des Feldkörpers (4) aufweist, und wobei der Sensor (9) in radialer Richtung einen Abstand zur Achse (7) aufweist.

2. Ring nach Anspruch 1, **dadurch gekennzeichnet, dass** zwei in radialer oder in axialer Richtung einander folgende Bereiche (5, 5''') Richtungen (6, 6''') der Magnetisierung aufweisen, die unterschiedliche Winkel mit einer orthogonal zu einer Ringebene orientierten Achse (7) einschließen.

3. Ring nach Anspruch 2, **dadurch gekennzeichnet, dass** die Änderung der Winkel in radialer oder in axialer Richtung zwischen 5° und 60° pro mm beträgt.

4. Ring nach Anspruch 3, **dadurch gekennzeichnet, dass** die Änderung der Winkel in radialer oder in axialer Richtung zwischen 10° und 20° pro mm beträgt.

5. Ring nach Anspruch 3, **dadurch gekennzeichnet, dass** die Änderung der Winkel in radialer oder in axialer Richtung zwischen 25° und 35° pro mm beträgt.

6. Ring nach einem der Ansprüche 1 bis 5, **dadurch gekennzeichnet, dass** der Feldkörper konkav ausgebildet ist.

7. Ring nach einem der Ansprüche 1 bis 6, **dadurch gekennzeichnet, dass** der Tragkörper konkav ausgebildet ist.

8. Ring nach einem der Ansprüche 1 bis 5 oder nach Anspruch 7, **dadurch gekennzeichnet, dass** die Oberfläche (10, 10''') in den Zonen ihrer Erstreckung, in der sich die Richtung (6, 6''') der Magnetisierung in radialer oder in axialer Richtung ändert, orthogonal oder parallel zur Achse (7) eben oder ungekrümmt ist.

9. Anordnung, umfassend eine rotierbare Welle (8) und einen mit dieser drehfest verbundenen Ring (1, 1''') nach einem der voranstehenden Ansprüche, wobei der Ring (1, 1''') koaxial zu der Welle (8) angeordnet und mit dieser rotierbar ist und wobei ein Sensor (9) vorgesehen ist, welcher magnetische Signale des magnetischen Felds erfasst.

## Claims

1. Ring (1, 1''') to be arranged on an element which can rotate about an axis (7), comprising a supporting body (2, 2''') which surrounds a central passage (3, 3'''), with the supporting body (2, 2''') being connected to a field body (4, 4'''), with the field body (4, 4''') having individual magnetized regions (5, 5''') which together generate a magnetic field, and with the individual regions (5, 5''') being magnetized in such a way that the direction (6, 6''') of their respective magnetization changes in the radial or in the axial direction, **characterized in that** the field body (4, 4''') can be turned towards a sensor (9) by way of a surface (10, 10'''), with the orientation of the dipoles (m) in the field body (4, 4''') being selected in such a way that they each form an angle α with the normal to the sensor plane (9a), and that, when a supporting body (2, 2''') which is not soft-magnetically powered is used, the angle α is equal to

$$\tan^{-1}\left(\frac{3\sin\beta\cos\beta}{1-3\sin^2\beta}\right),$$

or that, when a supporting body (2, 2''') which is soft magnetic is used, the angle α is greater than the angle β and less than

$$tan^{-1}\left(\frac{3\ sin\beta\ cos\beta}{1-3\ sin^2\ \beta}\right)$$

with the respective angle β being determined by a straight line which runs through the sensor (9) and the respective location of a dipole (M), with this straight line forming the respective angle β with the normal to the sensor plane (9a), with the sensor (9) being arranged in a read position which is at a read distance from the surface (10) of the field body (4) in the axial direction, and with the sensor (9) being at a distance from the axis (7) in the radial direction.

2. Ring according to Claim 1, **characterized in that** two regions (5, 5''') which follow one another in the radial or in the axial direction have directions (6, 6''') of the magnetization which form a different angle with an axis (7) which is oriented orthogonal to a ring plane.

3. Ring according to Claim 2, **characterized in that** the change in the angle in the radial or in the axial direction is between 5° and 60° per mm.

4. Ring according to Claim 3, **characterized in that** the change in the angle in the radial or in the axial direction is between 10° and 20° per mm.

5. Ring according to Claim 3, **characterized in that** the change in the angle in the radial or in the axial direction is between 25° and 35° per mm.

6. Ring according to one of Claims 1 to 5, **characterized in that** the field body is of concave design.

7. Ring according to one of Claims 1 to 6, **characterized in that** the supporting body is of concave design.

8. Ring according to one of Claims 1 to 5 or according to Claim 7, **characterized in that** the surface (10, 10''') is flat or non-curved in the zones of its extent, in which the direction (6, 6''') of the magnetization changes in the radial or in the axial direction, orthogonal or parallel to the axis (7).

9. Arrangement comprising a rotatable shaft (8) and a ring (1, 1''') which is connected to the said shaft in a rotationally fixed manner, with the ring (1, 1''') being arranged coaxially to the shaft (8) and it being possible for the ring to rotate with the said shaft, and with a sensor (9) which detects magnetic signals of the magnetic field being provided.

## Revendications

1. Anneau (1, 1''') destiné à être placé sur un élément apte à tourner autour d'un axe (7) et comprenant un corps de support (2, 2''') qui entoure un passage central (3, 3'''), le corps de support (2, 2''') étant relié à un corps de champ (4, 4'''), le corps de champ (4, 4''') présentant différentes parties magnétisées (5, 5''') qui produisent ensemble un champ magnétique, et

les différentes parties (5, 5''') étant magnétisées de telle sorte que la direction (6, 6''') de leur magnétisation varie dans la direction radiale et dans la direction axiale,
**caractérisé en ce que**
le corps de champ (4, 4'''), peut être orienté vers un capteur (9) par une surface (10, 10'''), l'orientation des dipôles (m) dans le corps de champ (4, 4''') étant sélectionnée de telle sorte qu'ils forment chacun avec la normale au plan (9a) du capteur un angle α et que lors de l'utilisation d'un corps de support (2, 2'''), qui n'est pas un matériau conducteur magnétique doux, l'angle α soit égal à

$$\tan^{-1}\left(\frac{3\ sin\beta\ cos\beta}{1-3\ sin^2\beta}\right)$$

ou que lors de l'utilisation d'un corps de support (2, 2''') qui est magnétique doux, l'angle α soit supérieur à l'angle β et soit inférieur à

EP 2 631 602 B1

$$\tan^{-1}\left(\frac{3\,sin\beta\,cos\beta}{1-3\,sin^2\beta}\right)$$

l'angle β étant défini par une droite qui traverse le capteur (9) et l'emplacement d'un dipôle (m), cette droite formant l'angle β avec la normale au plan (9a) du capteur, le capteur (9) étant disposé dans une position de lecture qui présente dans la direction axiale une distance de lecture par rapport à la surface (10) du corps de champ (4), le capteur (9) présentant dans la direction radiale une distance par rapport à l'axe (7).

2. Anneau selon la revendication 1, **caractérisé en ce que** deux parties (5, 5''') successives dans la direction radiale ou dans la direction axiale présentent des directions (6, 6''') de la magnétisation qui forment des angles différents avec un axe (7) orienté perpendiculairement à un plan de l'anneau.

3. Anneau selon la revendication 2, **caractérisé en ce que** la modification de l'angle dans la direction radiale ou dans la direction axiale est comprise entre 5° et 60° par mm.

4. Anneau selon la revendication 2, **caractérisé en ce que** la modification de l'angle dans la direction radiale ou dans la direction axiale est comprise entre 10° et 20° par mm.

5. Anneau selon la revendication 2, **caractérisé en ce que** la modification de l'angle dans la direction radiale ou dans la direction axiale est comprise entre 25° et 35° par mm.

6. Anneau selon l'une des revendications 1 à 5, **caractérisé en ce que** le corps de champ est concave.

7. Anneau selon l'une des revendications 1 à 6, **caractérisé en ce que** le corps de support est concave.

8. Anneau selon l'une des revendications 1 à 5 ou selon la revendication 7, **caractérisé en ce que** la surface (10, 10''') est plane ou non cintrée perpendiculairement ou parallèlement à l'axe (7) dans les parties de son extension dans lesquelles la direction (6, 6''') de la magnétisation varie dans la direction radiale ou dans la direction axiale.

9. Ensemble comprenant un arbre rotatif (8) et un anneau (1, 1''') relié à ce dernier à rotation solidaire selon l'une des revendications précédentes, l'anneau (1, 1''') étant disposé coaxialement par rapport à l'arbre (8) et pouvant tourner avec ce dernier, un capteur (9) qui saisit des signaux magnétiques du champ magnétique étant prévu.

**Fig. 1**

**Fig. 2**

**Fig. 3**

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1674831 A1

- JP 2008145185 A